# EUROPÄISCHE PATENTSCHRIFT

(11) **EP 0 896 702 B1**
(45) Veröffentlichungstag und Bekanntmachung des Hinweises auf die Patenterteilung: **16.08.2001**
(21) Anmeldenummer: 97916435.7
(22) Anmeldetag: 04.04.1997
(51) Int. Cl.: G06F 17/60

(54) **VERFAHREN ZUR AUTOMATISCHEN KONFIGURIERUNG EINES TECHNISCHEN SYSTEMS UNTER BERÜCKSICHTIGUNG UNTERSCHIEDLICHER QUALITÄTEN VON KOMPONENTEN-AUSSENWIRKUNGEN**
METHOD OF AUTOMATICALLY CONFIGURING A SYSTEM USING DIFFERENCES IN THE EXTERNAL APPEARANCE OF THE COMPONENTS
PROCEDE POUR LA CONFIGURATION AUTOMATIQUE D'UN SYSTEME TECHNIQUE, EN TENANT COMPTE DE DIVERSES QUALITES DES EFFETS EXTERNES DES COMPOSANTS

(30) Priorität: 06.04.1996 DE 19614789
(43) Veröffentlichungstag der Anmeldung: 17.02.1999
(73) Patentinhaber: DaimlerChrysler AG, 70567 Stuttgart (DE)
(72) Erfinder: JÜNGST, Ernst-Werner, D-13349 Berlin (DE); HEINRICH, Michael, D-14052 Berlin (DE)
(74) Vertreter: Lindner-Vogt, Karin, Dipl.-Phys.
(86) Internationale Anmeldenummer: EP9701694
(87) Internationale Veröffentlichungsnummer: WO9738384

(56) Entgegenhaltungen:
- WO-A-94/23372
- DE-A- 3 911 465

## Beschreibung

Die Erfindung betrifft ein Verfahren gemäß dem Oberbegriff des Anspruchs 1. Ein solches Verfahren ist in der DE 39 11 465 C2 beschrieben.

Der Stand der Technik kennt mehrere Verfahren und Einrichtungen, die automatisch ein technisches System aus Komponenten konfigurieren. Bei diesen Verfahren sind folgende Informationen vorgegeben: die formale Spezifikation des zu konfigurierenden Systems sowie ein Katalog von Komponenten-Typen und ihren Wechselwirkungen in rechnerverfügbarer Form. Als gewünschtes Ergebnis liefern die Verfahren mindestens eine Stückliste, d.h. eine Auflistung aller verwendeten Komponententypen und die Anzahl der Exemplare jedes verwendeten Typs - oder die Aussage, daß die Spezifikation mit den verfügbaren Komponententypen nicht erfüllbar ist.

Den Katalog stellt ein menschlicher Entwickler einmal auf und aktualisiert ihn bei der Einführung neuer oder der Streichung alter Komponententypen. Jedesmal, wenn ein technisches System zu entwerfen ist, formalisiert ein menschlicher Projektierer die Anforderungen an das System in einer Form, die die Informationsverarbeitungseinrichtung automatisch verarbeiten kann. Dann erzeugt die Einrichtung automatisch die Konfiguration des technischen Systems. Ältere aus der Literatur bekannte Ansätze, diese Aufgabe automatisch zu lösen, basieren darauf, daß ein Entwickler direkt Beziehungen zwischen Komponententypen notiert und daß diese abgespeicherten Relationen beim Konfigurieren ausgewertet werden. Zwei Beispiele: Ein Verbraucher vom Typ x benötigt eine Spannungsquelle vom Typ y. Eine Komponente vom Typ A ist unvereinbar mit einer solchen vom Typ B. Damit die technischen Abhängigkeiten automatisch berücksichtigt werden, ist ein umfangreiches Netz von IF - THEN - Regeln aufzustellen. Dieses Netz ist schwer zu überblicken. Die Gründe für ein bestimmtes Konfigurierungsergebnis sind kaum nachzuvollziehen. Außerdem veraltet es bei der Einführung neuer Komponententypen leicht. Diese Ansätze werden beispielsweise in J. McDermott: "A Rule-Based Configurer of Computer Systems", Artificial Intelligence 19 (1982) Seiten 39 bis 88 und E. Lehmann: "SICONFEX, ein Expertensystem für die Konfiguration eines Betriebssystems", 15. Jahrestagung der GI, 1985, Seiten 792 bis 805 vorgestellt.

Eine Klasse von Lösungen, die diese Nachteile vermeidet, ist aus DE 39 11 465 sowie A. Schwancke und J.P. Bernert: "Ressourcenorientierte Konfigurierung von Kommunikationssystemen", in N. Kratz, A. Günter & J. Hertzberg (Hrsg.): "Beiträge zum 4. Workshop Planen und Konfigurieren", Forschungsinstitut für anwendungsorientierte Wissensverarbeitung, Mai 1990, Seiten 157 bis 170, und
M. Heinrich: "Ressourcen-orientierte Modellierung als Basis des Konfigurierens modularer Technischer Systeme", in A. Günter & R. Cunis (Hrsg.) "Beiträge zum 5. Workshop Planen und Konfigurieren", Labor für Künstliche Intelligenz der Universität Hamburg, April 1991, Seiten 61 bis 74 und B. Stein & J. Weiner: "MOKON - Eine modellbasierte Entwicklungsplattform zur Konfigurierung technischer Anlagen", in A. Günter & R. Cunis (Hrsg.): "Beiträge zum 5. Workshop Planen und Konfigurieren", Labor für Künstliche Intelligenz der Universität Hamburg, April 1991, Seiten 100 bis 106 bekannt: das ressourcen-orientierte Konfigurieren. Beim ressourcenorientierten Konfigurieren werden im Katalog der verfügbaren Komponententypen nicht direkt Beziehungen zwischen Komponenten beschrieben. Vielmehr ist im Katalog der Komponententypen für jeden Typ angegeben, welche Ressourcen (Art und Umfang) eine Komponente des Typs bereitstellt und welche Ressourcen sie fordert, das heißt verbraucht, benutzt, belegt oder voraussetzt. Mit Hilfe von Ressourcen werden also die Außenwirkungen von Komponenten formalisiert dargestellt. Ressourcen beschreiben typischerweise physikalische Größen, Eigenschaften oder Schnittstellen. Bsp.: Strom bei 12 V-Gleichspannung oder Steckplatz in einem Magazin. Die Anforderungen an das zu konfigurierende technische System werden durch Angabe derjenigen Ressourcen formal beschrieben, die das technische System bereitzustellen hat.

Manche Ansätze kombinieren das ressourcenorientierte Konfigurieren mit Verfahren, die auf expliziten Nebenbedingungen ("constraints") beruhen. In WO 94/23372 A1 und WO 96/28784 A1 wird das zu konfigurierende technische System formal spezifiziert durch eine Anforderungsliste ("list of requests"). Eine Anforderung kann eine Ressource (im Sinne des ressourcenorientierten Konfigurierens), eine explizit genannte Komponente oder eine Nebenbedingung sein. Eine Nebenbedingung beschreibt eine bestimmte Beziehung zwischen mehreren Komponenten, die das zu konfigurierende technische System erfüllen muß. In WO 94/23372 A1 und WO 96/28784 A1 werden drei Arten von Nebenbedingungen beschrieben:
o Eine Komponente muß physikalisch in einer anderen Komponente enthalten sein ("container constraint")
o Eine Komponente muß mit einer anderen Komponente verbunden sein ("connection constraint")
o Die Verwendung einer Komponente erfordert die Verwendung einer anderen Komponente ("component constraint").

Außerdem wird in WO 94/23372 A1 und WO 96/28784 A1 die Verwendung einer weiteren Relation beschrieben, die dort Funktionshierarchie ("functional hierarchy") genannt wird. Diese Art von Relation wird in der Literatur üblicherweise als Taxonomie oder Verwandtschaftshierarchie unter Komponententypen bezeichnet, siehe beispielsweise DE 39 11 465 C2.

Daß zur Konfigurierung Nebenbedingungen und eine Taxonomie ausgewertet werden, ist auch aus anderen Literaturstellen bekannt, z.B. aus R. Cunis, A. Günter, I. Syska, H. Bode & H. Peters: "PLAKON - Modellierung von technischen Domänen mit BHIBS". In: M. Hein, W. Tank & J. Hertzberg (Hrsg.): "Beiträge zum 3. Workshop Planen und Konfigurieren", Arbeitspapiere der Gesellschaft für Mathematik und Datenverarbeitung 388, Mai 1989, Seiten 33 bis 48. Dort wird auch die Verwendung von Aufbau-Hierarchien ("part-of hierarchies") beschrieben, die den in WO 94/23372 A1 und WO 96/28784 A1 erwähnten "container constraints" entsprechen.

Nach dem Stand der Technik werden Anforderungen und Bereitstellungen einer Ressource nach Art und Umfang verglichen. Falls beispielsweise beim Konfigurieren eine Komponente V ausgewählt wird, die Strom mit 12 V-Gleichspannung benötigt, so wird danach eine andere Komponente B ausgewählt werden, die Strom mit 12 V-Gleichspannung bereitstellt und damit die Ressourcenbilanz hinsichtlich dieser Ressource ausgleicht.

Diese Auswahl ist aber nicht in jedem Falle geeignet, die Anforderung zu befriedigen: Falls die Komponente V Strom bei 12 V-Gleichspannung in einer bestimmten Spannungsstabilität benötigt, beispielsweise zwischen 10V und 14V Ist-Spannung, so muß B diese Ressource mit mindestens der geforderten Spannungsstabilität bereitstellen. Der Stand der Technik liefert zwar ein effizientes Verfahren, um Ressourcen hinsichtlich Art und Umfang zu vergleichen, jedoch kein geeignetes Verfahren, mit dem ein System zur automatischen Konfigurierung unterschiedliche Qualitäten von Ressourcen unterscheiden kann und entscheiden kann, ob die Anforderungen nach einer Ressource in der erforderlichen Qualität abgedeckt werden.

Eine Abhilfe nach dem Stand der Technik ist die, für jede mögliche Qualität einer Ressource formal eine eigene Ressource in den Katalog verfügbarer Komponententypen aufzunehmen. Im obigen Beispiel muß mit der Ressource "Strom bei 12 V-Gleichspannung mit Ist-Spannung zwischen 10V und 14V" anstelle mit "Strom bei 12 V-Gleichspannung" gearbeitet werden. Dadurch wird die Zahl der erforderlichen Ressourcen um Größenordnungen höher. Ein weiterer und prinzipieller Nachteil: Falls im Katalog verfügbarer Komponententypen kein Spannungsversorger enthalten ist, der Strom bei 12 V-Spannung genau dieser Stabilität bereitstellt, so kann die Konfigurierungsaufgabe nicht gelöst werden - beispielsweise auch dann nicht, wenn ein anderer Komponententyp existiert, der Strom bei 12 V-Spannung mit höherer Stabilität bereitstellt und den daher ein menschlicher Projektierer auswählen würde, da er diese Ressourcenanforderung abdecken würde.

Will man diesen Nachteil vermeiden, bleiben nach dem Stand der Technik nur zeitaufwendige und fehlerträchtige Wege, um trotzdem die Konfigurierungsaufgabe in der geforderten Genauigkeit zu lösen, beispielsweise:
o Man kombiniert ein Verfahren des ressourcenorientierten Konfigurierens mit herkömmlichen Modellierungsmethoden, die explizit Beziehungen zwischen Komponententypen enthalten. Ein Beispiel: Man stellt IF - THEN - Regeln der Form "Komponententyp A ist unvereinbar mit Komponententyp B" auf. Dieser Ausweg erfordert einen deutlich gesteigerten Pflegeaufwand bei Einführung neuer Typen von Komponenten.
o Man formuliert Regeln, die die Kompatibilität zwischen unterschiedlichen Qualitäten einer Ressource beschreiben. Dies führt ebenfalls zu einer großen Anzahl zusätzlicher Regeln.
o Man ändert bei jeder neuen Konfigurierungsaufgabe die Spezifikation des zu konfigurierenden technischen Systems so ab, daß die passenden Komponenten ausgewählt werden. Bei Aufnahme neuer Komponententypen in den Katalog verknüpft man den Komponententyp so mit Ressourcen, daß die Komponenten wie gewünscht zueinander passen. In der Regel wird die Aufnahme eines neuen Komponententyps dann erfordern, daß große Teile des bestehenden Katalogs überarbeitet werden.

Bei diesem Vorgehen kann also die formale Spezifikation nicht nur aufgrund der technischen Anforderungen an das zu konfigurierende technische System aufgestellt werden, sondern hängt zusätzlich von den verfügbaren Komponententypen ab. Auch bei diesem Vorgehen ist der Pflegeaufwand erheblich, und de facto wird keine Einrichtung zum automatischen Konfigurieren mehr geschaffen.

o Man formuliert für jede solche Situation spezielle IF - THEN - Regeln, manchmal auch als Produktionsregeln bezeichnet. Diese Regeln sind notgedrungen anwendungsspezifisch. Beispielsweise stellt man Regeln für die Ressource Strom bei 12 V-Gleichspannung und für unterschiedliche Spannungsstabilitäten auf.

Ein anderer Ausweg nach dem Stand der Technik ist der, durch die automatische Konfigurierung nur einen groben Entwurf durchführen zu lassen. Um den Grobentwurf nachträglich zu einer genauen Konfiguration des technischen Systems zu verfeinern, gibt es zwei Alternativen:
o Man wählt von Hand die tatsächlich verwendeten Komponenten aus.
o Konventionelle Ansätze des Konfigurierens werden ergänzend eingesetzt, beispielsweise ein System, das mit IF - THEN - Regeln die Auswahl der Komponenten explizit steuert und daher sehr anwendungsspezifisch ist.

Alle diese Abhilfen führen dazu, daß man die Vorteile des ressourcenorientierten Konfigurierens weitgehend wieder einbüßt.

Aufgabe der Erfindung ist es, ein Verfahren zur automatischen ressourcenorientierten Konfigurierung modularer technischer Systeme zu schaffen,
o das beim Konfigurieren Ressourcen gleicher Art, aber mit unterschiedlichen Qualitäten daraufhin vergleicht, ob sie miteinander kompatibel sind,
o das überschaubar und doch wirksam sowie flexibel und universell einsetzbar ist
o und das es ermöglicht, die Informationen im Katalog verfügberer Komponententypen bei Änderungen und Erweiterungen im Komponentenspektrum mit geringem Aufwand nachzuführen.

Diese Aufgabe wird bei einem Verfahren der eingangs genannten Art mit den im Anspruch 1 gekennzeichneten Merkmalen gelöst.

Das erfindungsgemäße Verfahren zeichnet sich dadurch aus, daß folgende Informationen explizit definiert und gespeichert werden:
o Welche unterschiedlichen Qualitäten haben die im Katalog verfügbarer Komponententypen definierten Ressourcen?
o Wie werden Ressourcen mit unterschiedlichen Qualitäten miteinander verglichen, um zu entscheiden, welche bereitgestellten Ressourcen mit nachgefragten Ressourcen einer bestimmten Qualität kompatibel sind?

Diese Informationen werden nicht den Ressourcen selber, sondern den Ressourcenarten, nach denen die Ressourcen klassifiziert werden, zugeordnet. Die Informationen für eine Ressourcenart gelten für alle Ressourcen dieser Art. Die Informationen über Ressourcenarten werden getrennt von denen über Komponententypen gespeichert und gepflegt.

Im Verlaufe einer ressourcenorientierten Konfigurierung wird wiederholt eine Ressourcenbilanz aufgestellt, und in ihr werden die geforderten Ressourcen nicht nur hinsichtlich Art und Umfang mit den bereitgestellten Ressourcen verglichen, sondern auch auf Kompatibilität mit jenen untersucht. Die Bilanz ist nur dann ausgeglichen, wenn jede Anforderung nach einer Ressource entweder durch die Bereitstellung einer Ressource mit der gleichen Qualität oder einer kompatiblen Ressource abgedeckt wird. Um zu entscheiden, ob eine bereitgestellte Ressource einer bestimmten Qualität kompatibel ist mit einer geforderten Ressource der gleichen Art, aber einer anderen Qualität, wendet die Informationsverarbeitungsanlage automatisch eine Entscheidungsvorschrift an, die im Speicher für Ressourcenarten abgelegt ist. Kann eine geforderte Ressource weder durch eine bereitgestellte Ressource gleicher Qualität noch durch eine bereitgestellte kompatible Ressource abgedeckt werden, so sind weitere Komponenten auszuwählen, die die erforderlichen Ressourcen in der benötigten Qualität oder kompatible Ressourcen bereitstellen.

Im folgenden werden vorteilhafte Ausgestaltungen nach der Erfindung beschrieben:
Ressourcen sind nach Ressourcenarten klassifiziert, z.B. die Ressourcenarten "Strom bei 12 V-Gleichspannung" oder "Steckplatz".
Ein Rechner zur automatischen Konfigurierung eines technischen Systems, der das erfindungsgemäße Verfahren anwendet, hat Lesezugriff auf folgende Speicher:
o Der erste Speicher enthält den Katalog verfügbarer Komponententypen, der gemäß der Erfindung folgende Informationen notiert:
   - Art, Umfang und Qualitäten der Ressourcen, die eine Komponente des Typs bereitstellt
   - Art, Umfang und Qualitäten der Ressourcen, die eine Komponente des Typs fordert, d.h. verbraucht oder belegt oder benutzt oder voraussetzt.
o Der zweite Speicher enthält die Beschreibung der Ressourcenarten. Sind für eine Ressourcenart unterschiedliche Qualitäten zu berücksichtigen, so sind in diesem Speicher folgende Informationen notiert:
   - Welche unterschiedliche Qualitäten haben die bereitgestellten und die geforderten Ressourcen dieser Art?
   - Mit welcher Vorschrift wird eine bereits bereitgestellte oder eine bereitstellbare Ressource R1 dieser Art daraufhin geprüft, ob sie mit einer geforderten Ressource R2 derselben Art kompatibel ist?
o Im dritten Speicher ist die formale Spezifikation des zu konfigurierenden technischen Systems abgelegt, die Art, Umfang und Qualitäten derjenigen Ressourcen festlegt, die das technische System bereitstellen soll.

Gemäß dem erfindungsgemäßen Verfahren ist für jede Ressourcenart eine zweiwertige Entscheidungsvorschrift abgespeichert. Diese Vorschriften sind den Ressourcenarten zugeordnet. Eine Entscheidungsvorschrift für die Ressourcenart Ra liefert für jedes Tupel, das aus einer Anforderung und einer Bereitstellung einer Ressource der Art Ra besteht, entweder als Ergebnis die Aussage, daß die Anforderung kompatibel mit der Bereitstellung ist, oder die gegenteilige Aussage.

Wird ein technisches System ressourcenorientiert konfiguriert, so werden im Verlaufe der Konfigurierung - in der Regel wiederholt - die geforderten Ressourcen mit den bereitgestellten verglichen. Hierfür wird für jede Ressourcenart mindestens eine eigene Bilanz aufgestellt. Besteht das zu konfigurierende technische System aus mehreren räumlich getrennten Teilsystemen, so werden mehrere lokale Bilanzen für dieselbe Ressourcenart aufgestellt. Die Erfindung legt fest, daß dieser automatische Vergleich in den Bilanzen nicht nur hinsichtlich Art und Umfang, sondern auch hinsichtlich unterschiedlicher Qualitäten von Ressourcen durchgeführt wird. Daher besteht eine Bilanz für eine Ressourcenart, für die unterschiedliche Qualitäten definiert sind, aus mehreren Teilbilanzen, nämlich eine für jede Qualität einer bereitgestellten oder geforderten Ressource.

Die Bilanz ist ausgeglichen, wenn jede Teilbilanz es ist. Die Teilbilanz T1 für eine Ressourcenqualität Q1 ist ausgeglichen, wenn jede Ressourcen-Anforderung in T1 auf eine der folgenden beiden Bereitstellungen ausgeglichen ist:
o durch die Bereitstellung einer Ressource in T₁ selber
o durch die Bereitstellung einer Ressource in einer anderen Teilbilanz T₂ derselben Ressourcenart. Dieser Ausgleich ist nur dann möglich,
   - wenn T₂ für eine mit Q₁ kompatible Ressource steht
   - und wenn in der Teilbilanz T₂ ein Überschuß besteht, d.h. die Ressourcen-Bereitstellungen in T₂ nicht bereits durch die Ressourcen-Anforderungen in T₂ oder in einer dritten Teilbilanz verbraucht werden.

Im ersten Fall wird die Ressourcenanforderung also durch eine Ressource gleicher Qualität befriedigt, im zweiten Fall durch eine kompatible Ressource.

Um die Qualitäten und Entscheidungsvorschriften zu definieren, legt man in der bevorzugten Ausführung der Erfindung fest, durch welche Attribute verschiedene Ressourcen derselben Art sich unterscheiden. Jedes Attribut steht für einen technischen Aspekt der Ressourcenart. Für jedes Attribut legt man fest, von welchem Datentyp die möglichen Werte des Attributs sind. Zusätzlich kann der Wertebereich eines Attributs definiert sein. Diese Definitionen und Festlegungen erfolgen für Ressourcenarten und unabhängig von den Komponententypen. Zwei Beispiele: Die Ressource "Strom bei 12 V-Gleichspannung" hat die Attribute "Ist-Spannung" und "Art der Absicherung gegen Überstrom?". Das erste Attribut ist stetig, das zweite diskret. "Steckplatz" hat keine Attribute.

Für ein Attribut kann man zusätzlich festlegen, welche Werte für das Attribut prinzipiell überhaupt möglich sind. Das Attribut "Art der Absicherung gegen Überstrom?" hat den Wertebereich {"Strombegrenzung", "Abschaltung", "fold-back"}.

Sei R eine Ressource von der Art Ra und sei festgelegt, daß Ra ein Attribut A besitzt. Im Katalog der verfügbaren Komponententypen ist für jeden Komponententyp K₁, der die Ressource R bereitstellt, eingetragen, welcher Bereich den Wert des Attributes A für die Komponenten vom Typ K₁ kennzeichnet. Dieser Bereich ist eine Teilmenge des Wertebereichs von A. Außerdem ist für jeden Komponententyp K₂, der R fordert, notiert, in welchem Bereich der Wert von A liegen muß, damit eine Komponente des Typs K₂ ihre Sollfunktion erfüllt.

Für einen bestimmten Komponententyp wird man im Komponententypkatalog festlegen, daß bei einer Komponente dieses Typs der, Wert eines stetigen Attributs einer Ressource in ein bestimmtes Intervall fällt bzw. fallen muß. Falls man einen genauen Wert festlegen will, definiert man ein Intervall mit einem Element. Für ein diskretes Attribut legt man eine Menge fest, die kein, ein oder mehrere Elemente enthält.

Zwei Beispiele: Für einen bestimmten Typ von Elektronik-Modulen, der Strom bei 12 V-Gleichspannung voraussetzt, ist notiert, daß die Ist-Spannung zwischen 10V und 14V liegen muß und die Stromversorgung bei Überstrom abgeschaltet werden muß. Ein bestimmter Typ von Spannungsversorgern liefert Strom bei 12 V-Gleichspannung mit einer garantierten Ist-Spannung zwischen 11V und 13V und mit einer Absicherung durch Strombegrenzung und durch Abschaltung.

Im folgenden werden vorteilhafte Ausgestaltungen der Erfindung beschrieben, um folgende Aufgabe zu lösen: Die unterschiedlichen Qualitäten einer Ressourcenart Ra seinen durch n Attribute A₁, ... , Aₙ gekennzeichnet. Aufzustellen ist eine automatisch auswertbare Entscheidungsvorschrift Φ, die zwei Ressourcen R₁ und R₂ der Ressourcenart Ra vergleicht. R₁ ist eine bereitgestellte und R₂ eine geforderte Ressource.
o Zwei Ressourcen R₁ und R₂ werden bezüglich jedes Attributes einzeln verglichen. R₁ ist nur dann mit R₂ kompatibel, wenn R₁ bezüglich jedes Attributes mit R₂ kompatibel ist. Formal: Man definiert n Funktionen Φᵢ. Jede einzelne Funktion Φᵢ ist für den Vergleich bezüglich des Attributes Aᵢ definiert (i=1,...,n) und liefert entweder "kompatibel" oder "nicht_kompatibel" zu. Φ liefert "kompatibel", falls alle Φᵢ "kompatibel" liefern, ansonsten "nicht_kompatibel".
o Der menschliche Entwickler, der die Informationen über die Ressourcenarten formuliert und einem Rechner verfügbar macht, spart Arbeit ein, wenn er für eine Ressourcenart mit den Attributen A₁, ..., Aₙ die Entscheidungsvorschriften Φ₁, ... Φₙ nicht vollständig neu definieren muß, sondern sie nur aus einem vorgegebenen Katalog von Vorschriften auswählt.

Die Entscheidungsvorschrift Φᵢ vergleicht dann, wenn das Attribut Aᵢ stetig ist, zwei Intervalle. Ist Aᵢ diskret, werden zwei Mengen verglichen. Der Entwickler definiert Φᵢ, indem er eine von zwei möglichen Entscheidungsvorschriften auswählt:
- Das Intervall bzw. die Menge I₁ (Werte der bereitgestellten Ressource) ist Teilmenge des Intervalls bzw. der Menge I₂ (Werte der geforderten Ressource). Diese Entscheidungsvorschrift ist für das Attribut Ist-Spannung anzuwenden.
- Das Intervall bzw. die Menge I₁ (Werte der bereitgestellten Ressource) ist Obermenge des Intervalls bzw. der Menge I₂ (Werte der geforderten Ressource).

Der Bereitsteller der Ressource Strom bei 12 V-Gleichspannung muß mindestens alle diejenigen Absicherungen gegen Überstrom bieten, die der Verbraucher erfordert.

Eine weitere vorteilhafte Ausgestaltung der Erfindung spart Laufzeit bei der Ausführung einer Konfigurierung ein, indem identische Prüfungen auf Kompatibilität nicht mehrmals durchgeführt werden, sondern nur einmal erfolgen und ihr Ergebnis abgespeichert wird. Dies wird mit Hilfe einer Datenstruktur realisiert, die die Form von gerichteten Graphen hat. Pro Ressourcenart wird ein gerichteter Graph angelegt. Jeder Knoten des gerichteten Graphen steht für eine Qualität einer Ressource dieser Art. Der Knoten für die Ressource R₁ ist Nachfolger des Knotens für die Ressource R₂, falls R₂ kompatibel mit R₁ ist.

Dieser gerichtete Graph wird vorteilhafterweise bereits dann erzeugt, wenn der Katalog verfügbarer Komponententypen aufgestellt ist. Er repräsentiert jede Qualitäten einer Ressource, die in diesem Katalog als von einem Komponententyp bereitgestellt oder gefordert ist. Um den Graphen aufzustellen, wird der Katalog vollständig nach Ressourcenqualitäten durchsucht. Jeder nur mögliche Vergleich zwischen zwei Ressourcen derselben Art mit verschiedenen Qualitäten wird durchgeführt und jede Kompatibilität als Kante in dem Graphen eingetragen. Der gerichtete Graph braucht nur dann erweitert zu werden, wenn in einer Spezifikation eine Ressourcenqualität gefordert wird, die nicht im Komponentenkatalog genannt ist oder wenn der Komponententypkatalog um einen Komponententyp mit neuen technischen Qualitäten erweitert wird. Zweckmäßigerweise ersetzt der "neue" Graph, der aufgrund einer neuen Spezifikation erweitert wurde, den alten Graphen.

Falls zur Laufzeit zu prüfen ist, ob eine bereitgestellte Ressource R₁ mit einer geforderten Ressource R₂ kompatibel ist, braucht die Informationsverarbeitungsanlage nur noch die beiden Knoten A und B im Graphen zu suchen, die für R₁ bzw. R₂ stehen. Falls eine Kante von A nach B existiert, falls also A ein Vorgänger von B und B ein Nachfolger von A ist, so ist R₁ mit R₂ kompatibel, ansonsten nicht. Da in der Regel mit demselben Komponententypkatalog mehrere Konfigurierungsaufgaben auszuführen sind, ist der nur einmal anfallende Rechenzeitaufwand für das Aufstellen des Graphens geringer als der zur Laufzeit eingesparte Rechenzeitaufwand für die Kompatibilitätsprüfungen.

Eine weitere vorteilhafte Ausgestaltung liegt darin,daß bereits nach Aufstellung des Komponententypkataloges unabhängig von einer bestimmten Spezifikation geprüft wird, ob die im Katalog beschriebenen Komponenten zueinander passen. Für jede Ressource, die ein im Katalog berücksichtigter Komponententyp K₁ in einer bestimmten Qualität fordert, wird nach einem Komponententyp K₂ gesucht, der die Ressource in der gleichen Qualität oder eine kompatible Ressource bereitstellt. Liefert diese Suche kein Ergebnis, so steht fest, daß bei einer automatischen Konfigurierung niemals eine Komponente des Typs K₁ ausgewählt werden darf. Ansonsten wären die Ressourcenanforderungen dieser Komponente nicht zu erfüllen. Bei einer automatischen Konfigurierung müßte die Entscheidung für eine Komponente des Typs K₁ zurückgezogen werden, ansonsten würde die Konfigurierung scheitern. Zweckmäßigerweise ergänzt ein menschlicher Entwickler den Katalog verfügbarer Komponententypen oder ändert ihn so ab, daß dieses Ergebnis nicht mehr auftreten kann.

Eine andere Art von Vorab-Prüfung erkennt nach Aufstellen der formalen Spezifikation, aber noch vor der eigentlichen Konfigurierung, daß die formale Spezifikation nicht erfüllbar ist. Von Vorteil ist es, dieses negative Ergebnis so früh wie möglich zu ermitteln und geeignete Abhilfen zu treffen. Für jede Ressource, die in einer bestimmten Qualität vom technischen System gefordert wird, wird nach einem geeigneten Komponententyp im Katalog gesucht. Läßt sich keiner finden, so steht bereits vor der eigentlichen Konfigurierung fest, daß mit den verfügbaren Komponenten kein technisches System konfiguriert werden kann, das der Spezifikation genügt.

Die beiden letztgenannten Ausgestaltungen lassen sich kombinieren. Der oben beschriebene Graph wird automatisch erzeugt. In jedem seiner Knoten wird notiert, ob die repräsentierte Ressourcenqualität eine bereitgestellte oder eine geforderte oder beides ist. Dann werden die Wurzeln des Graphen durchsucht, also alle Knoten, die keine Vorgänger haben. Wird hierbei eine Wurzel gefunden, die für eine geforderte Ressourcenqualität steht, so steht fest, daß eine Anforderung nach dieser Ressourcenqualität nicht erfüllt werden kann.

Zweckmäßigerweise werden in den drei Speichern Informationen, die für mehrere Komponententypen K₁, ... ,Kₙ gelten, nur einmal abgespeichert. Bei den n Komponententypen werden nicht mehr diese Informationen gespeichert, sondern nur noch eine Vorschrift, wie diese Informationen automatisch beschafft werden können. Dieses Vorgehen spart Speicherplatz, außerdem wird Zeit bei der Aufstellung der Informationen gespart.

Ein üblicher und anschaulicher Weg, den der Stand der Technik kennt, ist das Aufstellen einer Taxonomie (= Verwandtschaftshierarchie) unter Komponententypen. Beim Aufstellen des Katalogs verfügbarer Komponententypen führt man abstrakte Oberklassen von Komponententypen an, beispielsweise "Steckkarte". Die verfügbaren Komponenten-typen sind dann Unterklassen dieser abstrakten Oberklassen. Für mehrere abstrakte Oberklassen kann man wiederum eine gemeinsame (Ober-)Oberklasse einführen, die Taxonomie kann beliebig viele Ebenen haben.

Informationen, die allen Unterklassen einer Oberklasse gemeinsam sind, werden der Oberklasse zugeordnet. Beispielsweise wird für den Komponententyp "Steckkarte" notiert, daß jede Steckkarte die Ressource "Steckplatz" benötigt. Diese Informationen gelten damit für alle Unterklassen. Aus der Technik des objekt-orientierten Programmierens sind Verfahren bekannt, wie eine Unterklasse von einer Oberklasse Informationen "erbt". Verfeinerungen lehren Wege des mehrfachen Vererbens ("multiple inheritance"), bei der eine Klasse mehrere Oberklassen hat, von denen sie Informationen erbt, sowie Verfahren, um die gesamten Informationen über eine Klasse automatisch aus Informationen, die für die Klasse spezifisch sind und daher bei der Klasse selbst notiert sind, und aus Informationen, die bei einer Oberklasse notiert sind, zusammenzusetzen. In einer vorteilhaften Ausführung der Erfindung werden diese Verfahren angewendet, um beim Aufstellen des Katalogs verfügbarer Komponententypen Arbeitszeit und Speicherplatz zu sparen.

Nicht nur die Komponententypen lassen sich in einer Taxonomie anordnen, sondern auch für die Ressourcenarten stellt man vorteilhafterweise eine eigene Taxonommie auf. Vererbt werden kann beispielsweise die Existenz, der Datentyp und der Wertebereich von Attributen.

Den Katalog verfügbarer Komponententypen stellt ein menschlicher Experte einmal auf. Er definiert hierbei die Ressourcenarten und legt fest, welche Ressourcen und Ressourcenqualitäten die Komponententypen bereitstellen bzw. fordern. Die Anforderungsspezifikation an das zu konfigurierende technische System formuliert ein Projektierer. Beide Personen bedienen sich zweckmäßigerweise einer leistungsfähigen Benutzeroberfläche, wie sie Stand der Technik ist. In einer vorteilhaften Ausgestaltung legt der Experte einmal fest, welche Werte ein Attribut einer Ressourcenart überhaupt annehmen kann. Dieser Wertebereich ist für ein diskretes Attribut typischerweise eine Menge von Symbolen, beispielsweise {"Strombegrenzung", "Abschaltung, "fold-back"} für "Art der Absicherung gegen Überstrom?". Für ein stetiges Attribut wird der Experte meist ein Intervall definieren. Diese Festlegung vereinfacht die weitere Arbeit: Wenn festzulegen ist, in welcher Qualität ein Komponententyp eine durch Attribute gekennzeichnete Ressource bereitstellt oder erfordert, so bietet die Benutzeroberfläche dem Experten nur die Werte des zuvor festgelegten Wertebereiches eines diskreten Attributes zur Auswahl an. Bei einem stetigen Intervall muß der Zahlenbereich in das Intervall, das den Wertebereich kennzeichnet, fallen, was automatisch geprüft wird - ansonsten hat der Experte einen Fehler begangen. Die Festlegung der Wertebereiche unterstützt den Projektierer in analoger Weise dabei, die Anforderungsspezifikation für ein zu konfigurierendes technisches System zu beschreiben.

## Patentansprüche

1. Verfahren zur automatischen Konfigurierung von technischen Systemen aus Komponenten unter Verwendung einer Informationsverarbeitungseinheit mit Lesezugriff auf einen ersten Speicher,
o in dem ein Katalog verfügbarer Komponententypen abgespeichert wird
o und dabei für jeden verfügbaren Komponententyp im ersten Speicher mindestens eine der folgenden Informationen abgelegt wird:
- Art und Umfang der von einer Komponente des Typs bereitgestellten Ressourcen
- Art und Umfang der von einer Komponente des Typs vorausgesetzten, verbrauchten oder belegten Ressourcen,
mit Lesezugriff auf einen zweiten Speicher,
o in dem Informationen über Ressourcenarten abgespeichert werden, die jeweils allen Ressourcen derselben Art gemeinsam sind,
und mit Lesezugriff auf einen dritten Speicher,
o in dem die Anforderungsspezifikation für das zu konfigurierende technische System abgespeichert wird
o und dabei in diesem Speicher Art und Umfang der für das technische System geforderten Ressourcen abgelegt wird,
wobei die automatische Auswahl von Komponenten für das technische System durch die Informationsverarbeitungseinheit so vorgenommen wird,
daß, ausgehend von den für das technische System geforderten Ressourcen,
solange noch Ressourcenbedarf besteht und
Komponententypen im Katalog existieren, welche entsprechende Ressourcen bereitstellen, wiederholt jeweils eine oder mehrere Komponenten des bestgeeigneten Komponententyps ausgewählt werden
und deren bereitgestellte Ressourcen bzw. deren vorausgesetzte oder verbrauchte oder belegte Ressourcen im verbleibenden Ressourcenbedarf berücksichtigt werden,
**dadurch gekennzeichnt,**
daß im zweiten Speicher
o für mindestens eine Ressourcenart
- die Information abgespeichert wird, welche unterschiedlichen Qualitäten die Ressourcen dieser Art kennzeichnen,
- und eine Entscheidungsvorschrift notiert wird, die unter Bezugnahme auf mindestens eine dieser Qualitäten die Bedingung festlegt, unter der eine bereitgestellte Ressource dieser Art mit einer verbrauchten oder belegten oder vorausgesetzten Ressource dieser Art kompatibel ist,
daß im ersten Speicher
o für mindestens einen Komponententyp die Information abgelegt wird,
- von welcher Qualität eine von einer Komponente des Typs bereitgestellte Ressource ist oder
- von welcher Qualität eine von einer Komponente des Typs verbrauchte oder belegte oder vorausgesetzte Ressource sein muß, damit die Komponente die von ihr geforderte Funktion erfüllt,
und daß bei der automatischen Auswahl von Komponenten für das technische System mindestens einmal dann, wenn der jeweils verbleibende Ressourcenbedarf bestimmt wird,
o für jede Ressource, die von den im bisherigen Verlauf der Konfigurierung ausgewählten Komponenten vorausgesetzt oder verbraucht oder belegt wird und die von einer Ressourcenart ist, die gemäß den Informationen, die im zweiten Speicher abgespeichert wird, durch unterschiedliche Qualitäten
gekennzeichnet ist,
geprüft wird, ob eine Ressource von gleicher Qualität wie die geforderte Ressource oder eine Ressource, die mit der geforderten Ressource kompatibel ist, von den im bisherigen Verlauf der Konfigurierung ausgewählten Komponenten bereitgestellt wird,
wobei immer dann, wenn eine bereitgestellte Ressource auf Kompatibilität mit der geforderten Ressource geprüft wird, automatisch die Entscheidungsvorschriften angewendet werden, die im zweiten Speicher abgespeichert sind, und dann, wenn noch Ressourcenbedarf besteht,
o mindestens eine Komponente ausgewählt wird, die die geforderte Ressource in der gleichen Qualität bereitstellt
oder die eine mit der geforderten Ressource kompatible Ressource bereitstellt.

2. Verfahren nach Anspruch 1,
**dadurch gekennzeichnet,**
daß im dritten Speicher
o für mindestens eine Ressource, die gemäß der Anforderungsspezifikatien vom zu konfigurierenden technischen System gefordert ist, notiert wird, von welcher Qualität diese Ressource sein muß.

3. Verfahren nach Anspruch 1 oder Anspruch 2,
**dadurch gekennzeichnet,**
daß im zweiten Speicher
o für mindestens eine Ressourcenart
- die Information abgespeichert wird, welche Attribute der Qualitäten der Ressourcen dieser Art kennzeichnen,
- die Information abgespeichert wird, von welchen Datentypen die Attribute sind,
- und die Entscheidungsvorschrift, die die Bedingung festlegt, unter denen eine bereitgestellte Ressource dieser Art mit einer verbrauchten oder belegten oder vorausgesetzten Ressource dieser Art kompatibel ist, auf diese Attribute Bezug nimmt,
daß im ersten Speicher
o für mindestens einen Komponententyp
- die Information abgespeichert wird, welche Werte die Attribute der von einer Komponente dieses Typs bereitgestellten Ressourcen annehmen
oder
- die Information abgespeichert wird, welche Werte die Attribute der von einer Komponente dieses Typs vorausgesetzten oder verbrauchten oder belegten Ressourcen annehmen müssen.

4. Verfahren nach Anspruch 3,
**dadurch gekennzeichnet,**
daß im zweiten Speicher
o für mindestens eine Ressourcenart die zugeordnete Entscheidungsvorschrift daraus besteht, daß eine bereitgestellte Ressource einer bestimmten Qualität dann kompatibel mit einer geforderten Ressource einer anderen Qualität dieser Ressourcenart ist, wenn die Menge der Werte, die ein Attribut der Ressourcenart bei der Qualität der bereitgestellten Ressource annimmt, eine Teilmenge der Menge der Werte ist, die ein Attribut der Ressourcenart bei der Qualität der geforderten Ressource nur annehmen darf.

5. Verfahren nach Anspruch 3 oder Anspruch 4,
**dadurch gekennzeichnet,**
daß im zweiten Speicher
o für mindestens eine Ressourcenart die zugeordnete Entscheidungsvorschrift daraus besteht, daß eine bereitgestellte Ressource einer bestimmten Qualität dann kompatibel mit einer geforderten Ressource einer anderen Qualität dieser Ressourcenart ist, wenn die Menge der Werte, die ein Attribut der Ressourcenart bei der Qualität der bereitgestellten Ressource annimmt, eine Obermenge der Menge der Werte ist, die ein Attribut der Ressourcenart bei der Qualität der geforderten Ressource nur annehmen darf.

6. Verfahren nach Anspruch 3 oder Anspruch 4,
**dadurch gekennzeichnet,**
daß im zweiten Speicher
o für mindestens eine Ressourcenart die Information abgespeichert wird, welche Werte die Attribute, die die Ressourcen dieser Art kennzeichnen, annehmen.

7. Verfahren nach Anspruch 6,
**dadurch gekennzeichnet,**
daß weitere Informationen über die Ressourcen,
die ein verfügbarer Komponententyp bereitstellt oder fordert,
durch Interaktion mittels einer Bedienoberfläche gewonnen und im ersten Speicher abgelegt werden und die Bedienoberfläche hierbei die Werte eines Attributes einer Ressource zur Auswahl anbietet, wobei die Bedienoberfläche nur diejenigen Werte anbietet, die im zweiten Speicher als Wertebereich des Attributes abgelegt sind.

8. Verfahren nach Anspruch 6 oder Anspruch 7,
**dadurch gekennzeichnet,**
daß weitere Informationen über eine Ressource,
die vom zu konfigurierenden technischen System gefordert wird,
durch Interaktion mittels einer Bedienoberfläche gewonnen und im dritten Speicher abgelegt werden
und die Bedienoberfläche hierbei die Werte eines Attributes einer Ressource zur Auswahl anbietet, wobei die Bedienoberfläche nur diejenigen Werte anbietet, die im zweiten Speicher als Wertebereich des Attributes abgelegt sind.

9. Verfahren nach einem der Ansprüche 1 bis 8,
**dadurch gekennzeichnet,**
daß Informationen über die Entscheidungsvorschriften in einem ersten Teilspeicher des zweiten Speichers abgelegt werden
und daß die übrigen Informationen über die Ressourcenarten in einem zweiten Teilspeicher des zweiten Speichers abgelegt werden
und daß im zweiten Teilspeicher für jede Ressourcenart die Information abgespeichert ist,
o welche der Entscheidungsvorschriften, über die im ersten Teilspeicher Informationen abgelegt sind,
für eine Prüfung auf Kompatibilität von Ressourcen dieser Ressourcenart angewendet wird.

10. Verfahren nach einem der Ansprüche 1 bis 9,
**dadurch gekennzeichnet,**
daß für mindestens eine Ressourcenart
o im zweiten Speicher mehrere Teilentscheidungsvorschriften abgelegt werden
o und im zweiten Speicher die Information abgelegt wird,
daß die Entscheidungsvorschrift für die Ressourcenart daraus besteht,
- daß eine bereitgestellte Ressource dann mit einer geforderten Ressource dieser Ressourcenart kompatibel ist, wenn die Anwendung jeder Teilentscheidungsvorschrift das Ergebnis liefert, daß die bereitgestellte Ressource kompatibel mit der geforderten Ressource ist,
- und daß eine bereitgestellte Ressource dann mit einer geforderten Ressource dieser Ressourcenart nicht kompatibel ist, wenn die Anwendung mindestens einer Teilentscheidungsvorschrift das Ergebnis liefert, daß die bereitgestellte Ressource nicht kompatibel mit der geforderten Ressource ist.

11. Verfahren nach einem der Ansprüche 3 bis 8,
**dadurch gekennzeichnet,**
daß im zweiten Speicher
o für jedes Attribut mindestens einer Ressourcenart, für die mehrere Attribute definiert sind, mindestens eine Teilentscheidungsvorschrift abgespeichert wird, die nur auf dieses Attribut Bezug nimmt,
und die Entscheidungsvorschrift für die Ressourcenart daraus besteht,
- daß eine bereitgestellte Ressource dann mit einer geforderten Ressource dieser Ressourcenart kompatibel ist,
wenn die Anwendung jeder Teilentscheidungsvorschrift das Ergebnis liefert, daß die bereitgestellte Ressource bezüglich des Attributes, auf das diese Teilentscheidungsvorschrift Bezug nimmt, kompatibel mit der geforderten Ressource ist
- und daß eine bereitgestellte Ressource dann mit einer geforderten Ressource dieser Ressourcenart nicht kompatibel ist,
wenn die Anwendung mindestens einer Teilentscheidungsvorschrift das Ergebnis liefert, daß die bereitgestellte Ressource bezüglich des Attributes, auf das diese Teilentscheidungsvorschrift Bezug nimmt, nicht kompatibel mit der geforderten Ressource ist.

12. Verfahren nach einem der Ansprüche 1 bis 11,
**dadurch gekennzeichnet,**
daß für mindestens eine Ressource,
o deren Bereitstellung eine Komponente eines ersten Komponententyps, über den Informationen im ersten Speicher abgespeichert sind, in einer bestimmten Qualität fordert,
o geprüft wird,
ob für den ersten Komponententyp oder einen zweiten Komponententyp im ersten Speicher die Information abgespeichert ist,
daß eine Komponente dieses Typs entweder diese Ressource in der geforderten Qualität oder eine kompatible Ressource bereitstellt,
und dann, wenn kein Komponententyp gefunden wird, über den diese Information abgespeichert ist,
o der erste Komponententyp so gekennzeichnet wird, daß bei einer automatischen Konfiguration eines technischen Systems eine Komponente dieses Typs nicht ausgewählt werden kann
o und bei Bedarf diese Information über den ersten Komponententyp ausgegeben wird.

13. Verfahren nach einem der Ansprüche 1 bis 12,
**dadurch gekennzeichnet,**
daß für mindestens eine Ressource,
o die in der Anforderungsspezifikation, die im dritten Speicher abgelegt ist, in einer bestimmten Qualität gefordert wird,
o geprüft wird,
ob für einen Komponententyp im ersten Speicher die Information abgespeichert ist, daß eine Komponente dieses Typs entweder diese Ressource in der geforderten Qualität oder eine kompatible Ressource bereitstellt,
und dann, wenn kein Komponententyp gefunden wird, über den diese Information abgespeichert ist,
o die Information ausgegeben wird,
daß die Anforderungsspezifikation, die im dritten Speicher abgelegt ist,
mit Komponenten der Komponententypen, über die im ersten Speicher Informationen abgespeichert sind,
nicht erfüllt werden kann,
o und die Ressource(n), die nicht bereitgestellt werden können,
bei Bedarf gekennzeichnet werden.

14. Verfahren nach einem der Ansprüche 1 bis 13,
**dadurch gekennzeichnet,**
daß für mindestens eine Ressourcenart
o für mindestens zwei Ressourcen dieser Art von unterschiedlichen Qualitäten,
- von denen die erste Ressource von einem Komponententyp bereitgestellt wird, über den im ersten Speicher Informationen abgelegt sind,
- und die zweite Ressource von einem Komponententyp gefordert wird, über den im ersten Speicher Informationen abgelegt sind, oder von der Anforderungsspezifikation gefordert wird, die im dritten Speicher abgespeichert ist, im zweiten Speicher die Information abgespeichert wird, daß die erste Ressource mit der zweiten Ressource kompatibel ist,
und daß diese Information bei der automatischen Auswahl von Komponenten für das technische System mindestens einmal dann, wenn die zweite Ressource gefordert wird, berücksichtigt wird.

15. Verfahren nach Anspruch 14,
**dadurch gekennzeichnet,**
daß in einer ersten Phase
o für jede Ressourcenart, über die im zweiten Speicher Informationen abgespeichert werden, für jedes Paar, das aus zwei Ressourcen dieser Art von unterschiedlichen Qualitäten besteht,
- von denen die erste Ressource von einem Komponententyp bereitgestellt wird, über den im ersten Speicher Informationen abgelegt sind,
- und die zweite Ressource von einem Komponententyp gefordert wird, über den im ersten Speicher Informationen abgelegt sind,
im zweiten Speicher die Information abgespeichert ist, daß die erste Ressource mit der zweiten Ressource kompatibel ist,
und in einer zweiten Phase
o dann, wenn die automatische Konfigurierung eines technischen Systems durchgeführt werden soll,
die in der ersten Phase abgespeicherten Informationen bei der automatischen Auswahl von Komponenten für das technische System berücksichtigt werden.

16. Verfahren nach einem der Ansprüche 1 bis 15,
**dadurch gekennzeichnet,**
daß im ersten Speicher
o Informationen, die für jeden von mehreren Komponententypen gelten, nur einmal abgespeichert werden,
o und für jeden dieser Komponententypen eine Vorschrift notiert wird,
wie diese Informationen bei der automatischen Konfigurierung eines technischen Systems beschafft werden können.

17. Verfahren nach einem der Ansprüche 1 bis 16,
**dadurch gekennzeichnet,**
daß im zweiten Speicher
o Informationen, die für jede von mehreren Ressourcenarten gelten, nur einmal abgespeichert werden
o und für jede dieser Ressourcenarten eine Vorschrift notiert wird, wie diese Informationen bei der automatischen Konfigurierung eines technischen Systems beschafft werden können.

18. Verfahren nach Anspruch 16, dadurch gekennzeichnet,
daß die Komponententypen des Katalogs in einer Taxonomie der Komponententypen hierarchisch unter Oberklassen geordnet werden,
indem zu jedem Komponententyp im ersten Speicher ein Verweis auf die Oberklasse und zu jeder Oberklasse ein Verweis auf deren Oberklasse abgespeichert wird,
daß Informationen, die für alle Komponententypen, die einen Verweis auf dieselbe Oberklasse tragen, gelten, bei dieser Oberklasse im ersten Speicher notiert werden,
und daß Informationen über einen Komponententyp, die nicht bei dem Komponententyp selber notiert sind, den gespeicherten Daten einer Oberklasse des Komponententyps entnommen werden.

19. Verfahren nach Anspruch 17, dadurch gekennzeichnet,
daß die Ressourcenarten in einer Taxonomie der Ressourcenarten hierarchisch unter Oberklassen geordnet werden,
indem zu jeder Ressourcenart im zweiten Speicher ein Verweis auf die Oberklasse und zu jeder Oberklasse ein Verweis auf deren Oberklasse abgespeichert wird,
daß Informationen, die für alle Ressourcenarten, die einen Verweis auf dieselbe Oberklasse tragen, gelten,
bei dieser Oberklasse im zweiten Speicher notiert werden
und daß Informationen über eine Ressourcenart, die nicht bei der Ressourcenart selber notiert sind, den gespeicherten Daten einer Oberklasse der Ressourcenart entnommen werden.

## Claims

1. Method for automatically configuring technical systems from components using an information processing unit having read access to a first memory,
o which stores a catalogue of available component types,
o and, in this context, the first memory stores at least one of the following information items for each available component type:
- nature and scope of the resources provided by a component of the type,
- nature and scope of the resources required, used or reserved by a component of the type, having read access to a second memory,
o which stores information items relating to natures of resource, each of which is common to all resources of the same nature,
and having read access to a third memory,
o which stores the requirement specification for the technical system which is to be configured,
o and, in this context, this memory stores the nature and scope of the resources requested for the technical system,
where components are automatically selected for the technical system by the information processing unit such
that, on the basis of the resources requested for the technical system, so long as there is still a resource requirement, and component types providing appropriate resources exist in the catalogue,
one or more components of the most suitable component type are repeatedly selected in each case and their available resources or their required or used or reserved resources are taken into account in the remaining resource requirement,
characterized
in that
o for at least one nature of resource, the second memory
- stores the information regarding what different qualities characterize the resources of this nature,
- and notes a decision rule which stipulates, with reference to at least one of these qualities, the condition under which an available resource of this nature is compatible with a used or reserved or required resource of this nature,
in that the first memory
o stores, for at least one component type, the information
- regarding what quality is associated with a resource provided by a component of the type, or
- regarding what quality a resource used or reserved or required by a component of the type needs to have in order for the component to fulfil the function which is requested of it,
and in that, at least once when the respective remaining resource requirement is determined during automatic selection of components for the technical system,
o for each resource which is required or used or reserved by the components selected in the previous course of configuration and is of a nature of resource which, according to the information items stored in the second memory, is
characterized by different qualities,
a check is carried out to determine whether a resource of the same quality as the requested resource or a resource which is compatible with the requested resource is provided by the components selected in the previous course of configuration,
where, whenever an available resource is checked for compatibility with the requested resource, the decision rules stored in the second memory are automatically applied,
and, if there is still a resource requirement,
o at least one component which provides the requested resource in the same quality
or which provides a resource which is compatible with the requested resource is selected.

2. Method according to Claim 1,
characterized
in that the third memory
o notes, for at least one resource which is requested on the basis of the requirement specification by the technical system which is to be configured, what quality needs to be associated with this resource.

3. Method according to Claim 1 or Claim 2,
characterized
in that, in the second memory,
o for at least one nature of resource,
- the information regarding what attributes characterize the qualities of the resources of this nature is stored,
- the information regarding what data types are associated with the attributes is stored,
- and the decision rule which stipulates the condition under which an available resource of this nature is compatible with a used or reserved or required resource of this nature refers to these attributes, in that
o for at least one component type, the first memory
- stores the information regarding what values the attributes of the resources provided by a component of this type assume, or
- stores the information regarding what values the attributes of the resources required or used or reserved by a component of this type need to assume.

4. Method according to Claim 3,
characterized
in that, in the second memory,
o for at least one nature of resource,
the associated decision rule is that an available resource of a particular quality is compatible with a requested resource of another quality of this nature of resource if the quantity of values which an attribute of the nature of resource assumes for the quality of the available resource is a subset of the quantity of values which an attribute of the nature of resource may only assume for the quality of the requested resource.

5. Method according to Claim 3 or Claim 4,
characterized
in that, in the second memory,
o for at least one nature of resource,
the associated decision rule is that an available resource of a particular quality is compatible with a requested resource of another quality of this nature of resource if the quantity of values which an attribute of the nature of resource assumes for the quality of the available resource is a superset of the quantity of values which an attribute of the nature of resource may only assume for the quality of the requested resource.

6. Method according to Claim 3 or 4,
characterized in that
o for at least one nature of resource, the second memory
stores the information regarding what values the attributes which characterize the resources of this nature assume.

7. Method according to Claim 6,
characterized
in that other information items relating to the resources provided or requested by an available component type are obtained by means of interaction using a user interface and are stored in the first memory,
and the user interface in this case offers the values of an attribute of a resource for selection, with the user interface offering only those values which are stored in the second memory as the value range for the attribute.

8. Method according to Claim 6 or Claim 7,
characterized
in that other information items relating to a resource requested by the technical system which is to be configured are obtained by means of interaction using a user interface and are stored in the third memory,
and the user interface in this case offers the values of an attribute of a resource for selection, with the user interface offering only those values which are stored in the second memory as the value range for the attribute.

9. Method according to one of Claims 1 to 8,
characterized
in that information items relating to the decision rules are stored in a first memory section of the second memory,
and in that the other information items relating to the natures of resource are stored in a second memory section of the second memory,
and in that the second memory section stores, for each nature of resource, the information regarding
o which of the decision rules for which information items are stored in the first memory section
is applied for a check on compatibility of resources of this nature of resource.

10. Method according to one of Claims 1 to 9,
characterized
in that, for at least one nature of resource,
o the second memory stores a plurality of partial decision rules,
o . and the second memory stores the information
that the decision rule for the nature of resource is
- that an available resource is compatible with a requested resource of this nature of resource if the application of each partial decision rule delivers the result that the available resource is compatible with the requested resource,
- and that an available resource is not compatible with a requested resource of this nature of resource
if the application of at least one partial decision rule delivers the result that the available resource is not compatible with the requested resource.

11. Method according to one of Claims 3 to 8,
characterized
in that, in the second memory,
o for each attribute of at least one nature of resource for which a plurality of attributes are defined, at least one partial decision rule which refers only to this attribute is stored, and the decision rule for the nature of resource is
- that an available resource is compatible with a requested resource of this nature of resource if the application of each partial decision rule delivers the result that the available resource is compatible with the requested resource in terms of the attribute to which this partial decision rule refers,
- and that an available resource is not compatible with a requested resource of this nature of resource
if the application of at least one partial decision rule delivers the result that the available resource is not compatible with the requested resource in terms of the attribute to which this partial decision rule refers.

12. Method according to one of Claims 1 to 11,
characterized
in that, for at least one resource
o whose provision requests a component of a first component type, -for which information items are stored in the first memory, in a particular quality,
o a check is carried out to determine whether the first memory stores, for the first component type or a second component type, the information
that a component of this type provides either this resource in the requested quality or a compatible resource,
and, if no component type is found for which this information is stored,
o the first component type is marked such that a component of this type cannot be selected during automatic configuration of a technical system,
o and this information relating to the first component type is output if required.

13. Method according to one of Claims 1 to 12,
characterized
in that, for at least one resource
o which is requested in a particular quality in the requirement specification stored in the third memory,
o a check is carried out to determine whether, for a component type, the first memory stores the information that a component of this type provides either this resource in the requested quality or a compatible resource,
and, if no component type is found for which this information is stored,
o the information is output
that the requirement specification stored in the third memory,
cannot be satisfied
with components of the component types for which information items are stored in the first memory,
o and the resource(s) which cannot be provided are marked if required.

14. Method according to one of Claims 1 to 13,
characterized
in that, for at least one nature of resource,
o for at least two resources of this nature of different qualities,
- of which the first resource is provided by a component type for which information items are stored in the first memory,
- and the second resource is requested by a component type for which information items are stored in the first memory, or is requested by the requirement specification stored in the third memory, the second memory stores the information that the first resource is compatible with the second resource,
and in that this information is taken into account at least once when the second resource is requested during automatic selection of components for the technical system.

15. Method according to Claim 14,
characterized
in that, in a first phase,
o for each nature of resource for which information items are stored in the second memory, for each pair comprising two resources of this nature of different qualities,
- of which the first resource is provided by a component type for which information items are stored in the first memory,
- and the second resource is requested by a component type for which information items are stored in the first memory,
the second memory stores the information that the first resource is compatible with the second resource,
and, in a second phase,
o when the automatic configuration of a technical system is to be carried out,
the information items stored in the first phase are taken into account during automatic selection of components for the technical system.

16. Method according to one of Claims 1 to 15,
characterized
in that the first memory
o stores, just once, information items which apply to each of a plurality of component types,
o and notes, for each of these component types, a rule
regarding how these information items can be obtained during automatic configuration of a technical system.

17. Method according to one of Claims 1 to 16,
characterized
in that the second memory
o stores, just once, information items which apply to each of a plurality of natures of resource,
o and notes, for each of these natures of resource, a rule regarding how these information items can be obtained during automatic configuration of a technical system.

18. Method according to Claim 16, characterized in that the component types of the catalogue are arranged hierarchically under superordinate classes in a taxonomic system for the component types by virtue of the first memory storing, for each component type, a reference to the superordinate class, and, for each superordinate class, a reference to the superordinate class of that superordinate class,
in that information items which apply to all the component types which bear a reference to the same superordinate class are noted for this superordinate class in the first memory,
and in that information items relating to a component type which are not noted for the component type itself are removed from the stored data of a superordinate class of the component type.

19. Method according to Claim 17, characterized in that the natures of resource are arranged hierarchically under- superordinate classes in a taxonomic system for the natures of resource
by virtue of the second memory storing, for each nature of resource, a reference to the superordinate class, and, for each superordinate class, a reference to the superordinate class of that superordinate class,
in that information items which apply to all the natures of resource which bear a reference to the same superordinate class are noted for this superordinate class in the second memory,
and in that information items relating to a nature of resource which are not noted for the nature of resource itself are removed from the stored data of a superordinate class of the nature of resource.

## Revendications

1. Procédé pour la configuration automatique de systèmes techniques formés de composants avec utilisation d'une unité de traitement des informations avec accès de lecture sur une première mémoire
- dans laquelle est mémorisé un catalogue de types de composants disponibles
- et en outre au moins une des informations suivantes est mise pour chaque type de composants disponible dans la première mémoire :
- catégorie et étendue des ressources mises à disposition par un composant de ce type
- catégorie et étendue des ressources supposées, utilisées ou couvertes par un composant de ce type
avec accès de lecture sur une deuxième mémoire
- dans laquelle sont mémorisées des informations concernant les catégories de ressources, qui sont chaque fois communes à toutes les ressources de la même catégorie,
et avec accès de lecture sur une troisième mémoire
- dans laquelle est mémorisée la spécification d'exigence pour le système technique à configurer
- et en outre sont mises dans cette mémoire la catégorie et l'étendue des ressources exigées pour le système technique, la sélection automatique de composants pour le système technique étant réalisée par l'unité de traitement des informations, de telle sorte que
partant des ressources exigées pour le système technique,
aussi longtemps que subsiste encore un besoin de ressources et
qu'existent dans le catalogue les types de composants qui mettent à disposition des ressources correspondantes,
un ou plusieurs composants du type de composant le mieux approprié sont sélectionnés de manière répétitive à chaque fois
et leurs ressources mises à disposition ou selon le cas leurs ressources supposées ou utilisées ou couvertes sont prises en compte dans le besoin restant de ressources,
caractérisé en ce que
dans la deuxième mémoire
- pour au moins une catégorie de ressources
- est mémorisée l'information précisant quelles différentes qualités caractérisent les ressources de cette catégorie,
- et est notée une directive de décision qui établit, en tenant compte d'au moins une de ces qualités, la condition sous laquelle une ressource de cette catégorie, mise à disposition, est compatible avec une ressource utilisée ou couverte ou supposée de cette catégorie,
en ce que dans la première mémoire
- pour au moins un type de composants est mémorisée l'information,
- précisant la qualité d'une ressource mise à disposition par un composant de ce type ou
- précisant la qualité que doit avoir une ressource utilisée ou couverte ou supposée par un composant de ce type, pour que le composant remplisse la fonction qui lui est demandée, et en ce que lors de la sélection automatique de composants pour le système technique, au moins une fois lorsque le besoin de ressource à chaque fois restant est déterminé
- pour chaque ressource qui est supposée ou utilisée ou couverte par les composants sélectionnés dans le déroulement existant jusqu'alors de la configuration et qui relève d'une catégorie de ressources qui, selon les informations qui sont mémorisées dans la deuxième mémoire, est caractérisée par des qualités différentes, on vérifie si une ressource de même qualité que la ressource exigée ou une ressource qui est compatible avec la ressource exigée, est mise à disposition par les composants sélectionnés dans le déroulement de la configuration, ayant existé jusqu'alors,
les directives de décision qui ont été mémorisées dans la deuxième mémoire, étant appliqués automatiquement, chaque fois que l'on vérifie la compatibilité d'une ressource mise à disposition avec la ressource exigée, et ensuite, lorsqu'il subsiste encore un besoin de ressource,
- on sélectionne au moins un composant, qui met à disposition la ressource exigée dans la même qualité
ou qui met à disposition une ressource compatible avec la ressource exigée.

2. Procédé selon la revendication 1,
caractérisé en ce que
dans la troisième mémoire
- pour au moins une ressource
qui a été exigée par le système technique à configurer, conformément à la spécification de l'exigence, la qualité que doit posséder cette ressource est notée.

3. Procédé selon la revendication 1 ou la revendication 2,
caractérisé en ce que
dans la deuxième mémoire
- pour au moins une catégorie de ressources
- est mémorisée l'information précisant quels attributs
caractérisent les qualités des ressources de cette catégorie,
- est mémorisée l'information précisant de quel type de données sont les attributs,
- et la directive de décision qui établit la condition sous laquelle une ressource de cette catégorie mise à disposition est compatible avec une ressource de cette catégorie utilisée ou couverte ou supposée se rapporte à ces attributs, en ce que dans la première mémoire,
- pour au moins un type de composants
- est mise en mémoire l'information précisant quelles valeurs prennent les attributs des ressources mises à disposition par un composant de ce type
ou
- est mise en mémoire l'information précisant quelles valeurs doivent prendre les attributs des ressources supposées ou utilisées ou couvertes par un composant de ce type.

4. Procédé selon la revendication 3,
caractérisé en ce que
dans la deuxième mémoire
- pour au moins une catégorie de ressources
la directive de décision attribuée consiste en ce qu'une ressource mise à disposition d'une qualité définie est compatible avec une ressource exigée d'une autre qualité de cette catégorie de ressources lorsque l'ensemble des valeurs que prend un attribut de la catégorie de ressources dans le cas de la qualité de la ressource mise à disposition, est un sous-ensemble de l'ensemble de valeurs qu'un attribut de la catégorie de ressources ne peut que prendre dans le cas de la qualité de la ressource exigée.

5. Procédé selon la revendication 3 ou la revendication 4,
caractérisé en ce que
dans la deuxième mémoire
- pour au moins une catégorie de ressources, la directive de décision attribuée consiste en ce qu'une ressource mise à disposition d'une qualité définie est compatible avec une ressource exigée d'une autre qualité de cette catégorie de ressources lorsque l'ensemble de valeurs qu'un attribut de la catégorie de ressources prend dans le cas de la qualité de la ressource mise à disposition, est un ensemble supérieur à l'ensemble de valeurs qu'un attribut de la catégorie de ressources ne peut que prendre dans le cas de la qualité de la ressource exigée.

6. Procédé selon la revendication 3 ou la revendication 4
caractérisé en ce que
dans la deuxième mémoire
- pour au moins une catégorie de ressources est mémorisée l'information qui précise quelles valeurs prennent les attributs qui caractérisent les ressources de cette catégorie.

7. Procédé selon la revendication 6,
caractérisé en ce que
d'autres informations concernant les ressources
qu'exige ou met à disposition un type de composant disponible sont produites par interaction au moyen d'une surface de commande et mises dans la première mémoire
et que la surface de commande propose en l'occurrence à des fins de sélection les valeurs d'un attribut d'une ressource, la surface de commande ne proposant que les valeurs qui ont été mises dans la deuxième mémoire, à titre de zone de valeurs de l'attribut.

8. Procédé selon la revendication 6 ou la revendication 7,
caractérisé en ce que
d'autres informations concernant une ressource,
qui est exigée par le système technique à configurer
sont produites par interaction au moyen d'une surface de commande et mises dans la troisième mémoire
et que la surface de commande propose en l'occurrence à des fins de sélection les valeurs d'un attribut d'une ressource, la surface de commande ne proposant que les valeurs qui ont été mises dans la deuxième mémoire, à titre de zone de valeurs de l'attribut.

9. Procédé selon l'une quelconque des revendications 1 à 8
caractérisé en ce que des informations concernant les directives de décision sont mises dans une première mémoire partielle de la deuxième mémoire et en ce que les autres informations concernant les catégories de ressources sont mises dans une deuxième mémoire partielle de la deuxième mémoire
et en ce que dans la deuxième mémoire partielle est mise en mémoire pour chaque catégorie de ressources, l'information précisant
- laquelle des directives de décision concernant lesquelles des informations ont été mises dans la première mémoire partielle, pour un contrôle de la compatibilité de ressources de cette catégorie de ressources est appliquée.

10. Procédé selon l'une quelconque des revendications 1 à 9
caractérisé en ce que
pour au moins une catégorie de ressources
- plusieurs directives partielles de décision sont mises dans la deuxième mémoire
- et l'information est mise dans la deuxième mémoire,
en ce que la directive de décision pour la catégorie de ressources consiste en ce que
- une ressource mise à disposition est compatible avec une ressource exigée de cette catégorie de ressources lorsque l'application de chaque directive partielle de décision a pour résultat que la ressource mise à disposition est compatible avec la ressource exigée,
- et une ressource mise à disposition n'est pas compatible avec une ressource exigée de cette catégorie de ressources
lorsque l'application d'au moins une directive partielle de décision a pour résultat que la ressource mise à disposition n'est pas compatible avec la ressource exigée.

11. Procédé selon l'une quelconque des revendications 3 à 8,
caractérisé en ce que
dans la deuxième mémoire
- pour chaque attribut d'au moins une catégorie de ressources pour laquelle plusieurs attributs ont été définis, au moins une directive partielle de décision est mémorisée, qui ne se rapporte qu'à cet attribut,
et la directive de décision pour la catégorie de ressources consiste en ce que
- une ressource mise à disposition est compatible avec une ressource exigée de cette catégorie de ressources,
lorsque l'application de chaque directive partielle de décision a pour résultat que la ressource mise à disposition est compatible avec la ressource exigée en ce qui concerne l'attribut auquel se rapporte cette directive partielle de décision
et une ressource mise à disposition n'est pas compatible avec une ressource exigée de cette catégorie de ressources
lorsque l'application d'au moins une directive partielle de décision a pour résultat que la ressource mise à disposition n'est pas compatible avec la ressource exigée en ce qui concerne l'attribut auquel se rapporte l'élément de directive de décision.

12. Procédé selon l'une quelconque des revendications 1 à 11,
caractérisé en ce que
pour au moins une ressource,
- dont la mise à disposition exige dans une qualité déterminée un composant d'un premier type de composant au sujet duquel des informations ont été mémorisées dans la première mémoire
- on contrôle si, pour le premier type de composant ou pour un deuxième type de composant, a été mémorisée, dans la première mémoire, l'information,
précisant qu'un composant de ce type met à disposition soit cette ressource dans la qualité exigée ou une ressource compatible,
et ensuite, lorsqu'aucun type de composant n'est trouvé au sujet duquel cette information a été mémorisée,
- le premier type de composant est caractérisé de telle sorte que lors d'une configuration automatique d'un système technique, un composant de ce type ne peut être sélectionné
- et en cas de besoin, cette information concernant le premier type de composant peut être sortie.

13. Procédé selon l'une quelconque des revendications 1 à 12
caractérisé en ce que
pour au moins une ressource
- qui est exigée dans une qualité déterminée dans la spécification d'exigence qui a été mise dans la troisième mémoire,
- on contrôle
si pour un type de composant a été mise en mémoire dans la première mémoire l'information précisant qu'un composant de ce type met à disposition soit cette ressource dans la qualité exigée soit une ressource compatible,
et ensuite, s'il n'est trouvé aucun type de composant à propos duquel cette information a été mémorisée,
- on sort l'information
précisant que la spécification d'exigence qui a été émise dans la troisième mémoire,
ne peut être satisfaite avec des composants des types de composants à propos desquels des informations ont été mises en mémoire dans la première mémoire
- et on marque au besoin la (les) ressource(s) qui ne peu(ven)t être mises à disposition.

14. Procédé selon l'une quelconque des revendications 1 à 13,
caractérisé en ce que
pour au moins une catégorie de ressources
- pour au moins deux ressources de ce type de qualités différentes,
- parmi lesquelles la première ressource est mise à disposition par un type de composant au sujet duquel des informations ont été mises dans la première mémoire,
- et la deuxième ressource est exigée par un type de composant au sujet duquel des informations ont été mises dans la première mémoire, ou est exigée par la spécification d'exigence qui a été mémorisée dans la troisième mémoire, l'information est mémorisée dans la deuxième mémoire, précisant que la première ressource est compatible avec la deuxième ressource,
et en ce que cette information est prise en compte lors de la sélection automatique de composants pour le système technique au moins une fois lorsque la deuxième ressource est exigée.

15. Procédé selon la revendication 14,
caractérisé en ce que
dans une première phase
- pour chaque catégorie de ressources, au sujet de laquelle des informations sont mémorisées dans la deuxième mémoire,
pour chaque paire qui consiste en deux ressources de cette catégorie de qualités différentes,
- dont la première ressource est mise à disposition par un type de composant au sujet duquel des informations ont été mises dans la première mémoire,
- et la deuxième ressource est exigée par un type de composant au sujet duquel des informations ont été mises dans la première mémoire,
l'information a été mémorisée dans la deuxième mémoire, précisant que la première ressource est compatible avec la deuxième ressource,
et dans une deuxième phase
- lorsque la configuration automatique d'un système technique doit être réalisée,
les informations mémorisées dans la première phase sont prises en compte pour le système technique lors de la sélection automatique de composants.

16. Procédé selon l'une quelconque des revendications 1 à 15,
caractérisé en ce que
dans la première mémoire
- des informations qui sont valables pour chacun des différents types de composants ne sont mémorisées qu'une seule fois
- et pour chacun de ces types de composants, une directive est notée,
précisant comment ces informations peuvent être obtenues lors de la configuration automatique d'un système technique.

17. Procédé selon l'une quelconque des revendications 1 à 16,
caractérisé en ce que
dans la deuxième mémoire
- des informations qui sont valables pour chacune des différentes catégories de ressources ne sont mémorisées qu'une seule fois
- et pour chacune de ces catégories de ressources, une directive est notée,
précisant comment ces informations peuvent être obtenues lors de la configuration automatique d'un système technique.

18. Procédé selon la revendication 16,
caractérisé en ce que,
les types de composants du catalogue sont classés dans une taxonomie des types de composants de manière hiérarchique en classes supérieures,
en mémorisant dans la première mémoire pour chaque type de composants une référence à la classe supérieure, et pour chaque classe supérieure une référence à sa classe supérieure,
en ce que des informations qui sont valables pour tous les types de composants qui portent une référence à la même classe supérieure, sont notées dans cette classe supérieure dans la première mémoire,
et en ce que des informations concernant un type de composant qui n'ont pas été notées auprès du type de composant lui-même sont retirées des données mémorisées d'une classe supérieure du type de composant.

19. Procédé selon la revendication 17,
caractérisé en ce que
les catégories de ressources sont classées dans une taxonomie des catégories de ressources de manière hiérarchique en classes supérieures,
en mémorisant dans la première mémoire une référence à la classe supérieure pour chaque catégorie de ressources, et pour chaque classe supérieure une référence à sa classe supérieure,
en ce que des informations qui sont valables pour toutes les catégories de ressources qui portent une référence à la même classe supérieure, sont notées auprès de cette classe supérieure dans la deuxième mémoire,
et en ce que des informations concernant une catégorie de ressources qui n'ont pas été notées auprès de la catégorie de ressources elle-même sont retirées des données mémorisées d'une classe supérieure de la catégorie de ressources.
